# EUROPÄISCHE PATENTANMELDUNG

(11) **EP 3 480 542 A1**
(43) Veröffentlichungstag der Anmeldung: **08.05.2019**
(21) Anmeldenummer: 17199847.9
(22) Anmeldetag: 03.11.2017
(51) Int. Cl.: F26B 5/08, B04B 1/20, B04B 11/02, F26B 17/22

(54) **TRENNVORRICHTUNG ZUM TRENNEN EINES GEMISCHES AUS EINEM FESTEN STOFF UND EINEM FLUID**

(71) Anmelder: Nordson Corporation, Westlake, OH 44145 (US)
(72) Erfinder: Schnellbach, Nikolai, 48308 Senden (DE); Schlief, Dirk, 48249 Dülmen (DE); El jouhari, Kamal, 48159 Münster (DE)
(74) Vertreter: Eisenführ Speiser

(57) **Zusammenfassung**

Die Erfindung betrifft eine Trennvorrichtung (1), insbesondere einen Zentrifugaltrockner, zum Trennen eines Gemisches aus einem festen Stoff und einem Fluid, insbesondere von Granulat und Wasser, mit einem Gehäuse (2), welches mindestens einen Einlass (4) zum Zuführen des Gemisches und mindestens einen Auslass (6, 6') zum Abführen des von dem Gemisch getrennten festen Stoffes und/oder des Fluids aufweist, einem innerhalb des Gehäuses (2) drehbar gelagerten Rotor (10), der dazu eingerichtet ist, durch Drehung eine Bewegung des festen Stoffes mit einer Transportrichtung im Wesentlichen entlang seiner Längsachse (10') zu bewirken, und einer durch mindestens einen Siebkörper (16) definierten Trennkammer (12), in welcher der Rotor (10) angeordnet ist und die mindestens einen Einlaufbereich (28, 28') für das Gemisch und zumindest eine Ausgabeöffnung (30) für den festen Stoff aufweist. Der Einlaufbereich (28, 28') ist so an der Trennkammer (12) ausgebildet, dass das Gemisch bei Eintritt in die Trennkammer (12) eine Bewegung mit zumindest einer bezogen auf die Längsachse (10') des Rotors (10) axialen Komponente in Transportrichtung (22) ausführt.

## Beschreibung

Die Erfindung bezieht sich auf eine Trennvorrichtung, insbesondere einen Zentrifugaltrockner, zum Trennen eines Gemisches aus einem festen Stoff und einem Fluid, insbesondere von Granulat und Wasser, mit einem Gehäuse, welches mindestens einen Einlass zum Zuführen des Gemisches und mindestens einen Auslass zum Abführen des von dem Gemisch getrennten festen Stoffes und/oder des Fluids aufweist, einem innerhalb des Gehäuses drehbar gelagerten Rotor, der dazu eingerichtet ist, durch Drehung eine Bewegung des festen Stoffes mit einer Transportrichtung im Wesentlichen entlang seiner Längsachse zu bewirken, und einer durch mindestens einen Siebkörper definierten Trennkammer, in welcher der Rotor angeordnet ist und die mindestens einen Einlaufbereich für das Gemisch und zumindest eine Ausgabeöffnung für den festen Stoff aufweist.

Trennvorrichtungen der vorbezeichneten Art werden im Stand der Technik zum Trennen eines Gemisches, bestehend zum Beispiel aus einem festen Stoff und einem Fluid, in die jeweiligen Bestandteile eingesetzt. Das Gemisch aus dem festen Stoff, auch bezeichnet als Feststoff, und dem Fluid wird der Trennvorrichtung insbesondere als kontinuierlicher Förderstrom zugeführt. Die auch als Zentrifugaltrockner bekannten Trennvorrichtungen werden beispielsweise in der kunststoffverarbeitenden Industrie verwendet. Mittels einer derartigen Trennvorrichtung wird zum Beispiel ein Kunststoff-Granulat aus beispielsweise einem das Granulat fördernden Wasserstrom separiert, um das separierte Granulat einer Weiterverarbeitung oder Verpackung zuführen zu können.

Die bekannten Trennvorrichtungen weisen insbesondere ein Gehäuse mit einem Einlass zum Zuführen des Gemisches und mindestens einem Auslass zum Abführen des festen Stoffes und/oder des Fluids auf. Die Trennkammer umfasst zumindest einen Einlaufbereich für das darin einzuleitende Gemisch und zumindest eine Ausgabeöffnung für den separierten festen Stoff. Die Trennkammer wird zumindest bereichsweise durch einen Siebkörper ausgebildet, der dazu eingerichtet ist, den festen Stoff innerhalb der Trennkammer zurückzuhalten, wobei das Fluid durch den Siebkörper hindurchtreten kann. Innerhalb der Trennkammer ist ein drehbar gelagerter Rotor angeordnet, der durch Drehung eine Bewegung zumindest des festen Stoffes mit einer Transportrichtung im Wesentlichen entlang seiner Längs- bzw. Rotationsachse bewirkt.

Der Einlaufbereich der Trennkammer, welche eine zylindrische Form aufweisen kann, ist üblicherweise an der Umfangswandung der Trennkammer ausgebildet. Der Einlaufbereich weist häufig ein in Richtung des Bodens der Trennkammer weisendes Gefälle auf. Das Gemisch strömt daher, aufgrund der im Gemisch enthaltenen Lageenergie, selbsttätig in die Trennkammer hinein. Das Gemisch erfährt dann mittels des in der Trennkammer angeordneten und sich drehenden Rotors eine (Umlenk- oder Umkehr-) Bewegung in andere Richtungen, insbesondere nach oben. Der feste Stoff und zumindest Teile des Fluids werden über eine vorbestimmte Höhe des Rotors insbesondere entlang der Längsachse des Rotors bewegt.

Der zu separierende Feststoff kann unter Umständen abrasive Eigenschaften aufweisen und/oder Füllstoffe enthalten, wie beispielsweise Glasfasern oder Gesteinsmehl, die abrasive Eigenschaften haben. Bei der Umlenk-Bewegung des Gemisches nach dem Einleiten in die Trennkammer kann im unteren Abschnitt des Rotors im Vergleich zu den oberen Abschnitten ein deutlich höherer Verscheiß am Rotor auftreten. Der Verschleiß macht eine Wartung in regelmäßigen Zeitintervallen notwendig, die mit entsprechenden Stillstandszeiten etwaiger vor- oder nachgeschalteter Komponenten einer zum Beispiel kunststoffverarbeitenden Anlage verbunden ist.

Der Erfindung lag daher die Aufgabe zugrunde, eine Trennvorrichtung zum Trennen eines Gemisches aus einem festen Stoff und einem Fluid anzugeben, an dem ein verringerter Verschleiß auftritt.

Die Erfindung löst die ihr zugrundeliegende Aufgabe bei einer Trennvorrichtung zum Trennen eines Gemisches aus einem festen Stoff und einem Fluid, insbesondere von Granulat und Wasser, mit den Merkmalen des Gegenstands von Anspruch 1. Insbesondere ist der Einlaufbereich so an der Trennkammer ausgebildet, dass das Gemisch bei Eintritt in die Trennkammer eine Bewegung mit zumindest einer bezogen auf die Längsachse des Rotors axialen Komponente in Transportrichtung ausführt.

Der Erfindung liegt die Erkenntnis zugrunde, dass mithilfe des erfindungsgemäß ausgebildeten Einlaufbereiches die Umlenkung oder Umlenk-Bewegung des Gemisches bei Eintritt in die Trennkammer zumindest verringert oder minimiert ist, vorzugsweise keine Umlenkbewegung mehr erfolgt. Damit ist der Verschleiß von insbesondere dem unteren Abschnitt des Rotors selbst bei einem Trennvorgang eines festen Stoffes mit abrasiven Eigenschaften aus einem Fluid auf ein Minimum reduziert. Damit kann die Standzeit des Rotors und anderer mit dem Gemisch und dem daraus heraus zu trennenden Feststoffs in Kontakt gelangender Bauteile und Komponenten verlängert und die Abstände zwischen möglichen Wartungsintervallen am Rotor vergrößert werden. In einer möglichen Ausführungsform der Erfindung ist der Einlaufbereich so an der Trennkammer ausgebildet, dass das Gemisch über die Umfangswandung der Trennkammer in die Trennkammer eingeleitet wird. Der Einlaufbereich weist insbesondere zur Längsachse der Trennkammer und damit zur Drehachse des in der Trennkammer aufgenommenen Rotors eine Ausrichtung auf, in der das Gemisch bei Eintritt in die Trennkammer eine Bewegung ausführt, die eine axiale Komponente hat, welche in dieselbe Richtung gerichtet ist, wie die mit dem Rotor umgesetzte Transportrichtung des festen Materials. Die axiale Komponente der Bewegung des Gemisches und die Transportrichtung des festen Materials sind demnach gleichgerichtet. Vorliegend ist der Begriff "Komponente" als Teil einer Bewegung bzw. als Bewegungskomponente zu verstehen.

Gemäß einer bevorzugten Ausführungsform der Erfindung ist der Einlaufbereich so an der Trennkammer ausgebildet, dass das Gemisch bei oder nach Eintritt in die Trennkammer in eine im Wesentlichen spiralförmige Bewegung mit einer tangentialen und einer axialen Komponente versetzt ist. Bevorzugt führt das Gemisch bereits bei Eintritt in die Trennkammer eine spiralförmige Bewegung aus. Dadurch wird das Gemisch nur noch geringfügig in der Trennkammer durch den sich drehenden Rotor umgelenkt. Das spiralförmige Einleiten des Gemisches verringert vorzugsweise den Verschleiß im unteren Bereich des Rotors weiter. Die spiralförmige Bewegung weist zumindest eine tangentiale und eine axiale Komponente auf, welche in einer bevorzugten Ausführungsform etwa gleich groß sein können. Die axiale Komponente der Bewegung hat dieselbe Richtung, wie die Transportrichtung des Feststoffes entlang des Rotors.

Vorzugsweise ist der Einlaufbereich für das Gemisch in einem unteren Abschnitt der Trennkammer angeordnet, vorzugsweise an einer bodenseitigen Stirnwand, wobei bevorzugt der Einlaufbereich in einem Winkel α, α' im Bereich von 5 bis 85° zur Längsachse des Rotors angeordnet ist. Innerhalb des angegebenen Winkelbereiches erzeugt der an der Trennkammer ausgebildete Einlaufbereich vorzugsweise eine Bewegung des in die Trennkammer eingeleiteten Gemisches, mittels der das Gemisch von dem sich drehenden Rotor, unter Vermeidung einer Umlenkbewegung am eingeleiteten Gemisch vom Einlaufbereich in Richtung der Ausgabeöffnung abgeführt wird. Vorliegend ist unter einer Umlenkbewegung eine Änderung wenigstens einer Bewegungskomponente in eine entgegengesetzte Richtung zu verstehen. In Abhängigkeit vom Winkel des Einlaufbereiches relativ zur Längsachse des Rotors ist bevorzugt der Anteil der axialen Komponente der Bewegung des Gemisches einstellbar. Je geringer der Winkel desto größer ist die axiale Komponente. Durch die Rotation des Rotors wirkt eine Zentrifugalkraft auf das in die Trennkammer eingeleitete Gemisch, wobei das Gemisch in Richtung des die Trennkammer definierenden Siebkörpers nach außen bewegt wird. Das Fluid tritt aufgrund der wirkenden Zentrifugalkraft durch den Siebkörper hindurch, wobei der feste Stoff auf der Innenseite des Siebkörpers zurückgehalten wird und mittels des Rotors in Transportrichtung bewegt wird.

Bevorzugt ist der Einlaufbereich an der Stirnwand, vorzugsweise der bodenseitigen Stirnwand der Trennkammer angeordnet. Das Einleiten des Gemisches über die bodenseitige Stirnwand der Trennkammer birgt den Vorteil, dass das Gemisch über die Stirnwand in einer Vorzugsrichtung in die Trennkammer eingeleitet werden kann, bei der der entstehende Verschleiß am Rotor durch den vom Einlaufbereich in Richtung der Ausgabeöffnung zu transportierenden festen Stoff auf weiter verringert wird.

Gemäß einer bevorzugten Weiterbildung der Erfindung ist vorgesehen, dass der Einlaufbereich verstellbar an der Trennkammer, insbesondere an deren bodenseitigen Stirnwand, angeordnet ist. Mit dem verstellbar angeordneten Einlaufbereich ist der Einströmwinkel des Gemisches in die Trennkammer bevorzugt veränderbar. Insbesondere in Abhängigkeit der mittels der Trennvorrichtung umzusetzenden Parameter wie beispielsweise Drehzahl des Rotors bzw. Größe des zu separierenden Förderstromes, kann der Einströmwinkel bevorzugt individuell angepasst werden. Insbesondere in Abhängigkeit von den Eigenschaften des zu separierenden festen Stoffes, wie beispielsweise Größe oder Dichte des Stoffes, wird das Verhältnis zwischen der zumindest axialen Komponente und der tangentialen Komponente der Bewegung des Gemisches bei Eintritt in die Trennkammer verändert.

Eine bevorzugte Weiterbildung der Erfindung sieht vor, dass im Einlaufbereich ein oder mehrere Leitelemente, vorzugsweise Leitbleche angeordnet sind, wobei das Leitelement feststehend oder verstellbar innerhalb des Einlaufbereiches aufgenommen ist. Mithilfe eines im Einlaufbereich angeordneten Leitelementes kann das in die Trennkammer eingeleitete Gemisch unabhängig von der Ausrichtung des Einlaufbereiches selbst auf vorteilhafte Weise umgeleitet bzw. der Einströmwinkel des Gemisches mit dem Leitelement bevorzugt angepasst werden. Das Leitelement, welches bevorzugt als Leitblech ausgebildet ist, kann innerhalb des Einlaufbereiches angeordnet sein. Mittels des Leitelements ist zumindest eine geringfügige Querschnittsverringerung im Einlaufbereich der Trennkammer bewirkt. Durch die Querschnittsverringerung wird die Strömungsgeschwindigkeit des einströmenden Gemisches erhöht.

In einer Ausführungsform der vorliegenden Erfindung ist das Leitelement feststehend innerhalb des Einlaufbereiches angeordnet. Gemäß einer anderen bevorzugten Ausführungsform ist das oder sind die Leitelemente verstellbar im Einlaufbereich ausgebildet. Damit ist eine individuelle Anpassung des Einströmwinkels des Gemisches in die Trennkammer, insbesondere in Abhängigkeit von den Eigenschaften bzw. der Zusammensetzung des in die Trennkammer eingeleiteten Gemisches möglich.

Bevorzugt weist der Einlaufbereich eine Einlaufachse auf, die bezogen auf eine durch die Längsachse des Rotors und den Einlaufbereich verlaufende Hauptachse, welche in einer Ebene senkrecht zur Längsachse des Rotors ausgerichtet ist, in einem Winkel im Bereich von etwa 0 bis 90° angeordnet ist. Neben einer Anpassung des Einströmwinkels, bezogen auf die Längsachse des Rotors, wodurch vornehmlich der Anteil der axialen Komponente der Einströmbewegung angepasst wird, kann durch Anpassen des Winkels zwischen der Einlaufachse und der Hauptachse ein bestimmtes Verhältnis zwischen der tangentialen und der radialen Komponente der Bewegung des Gemisches mit Einströmen in die Trennkammer eingestellt werden. Damit weist die Bewegung des in die Trennkammer eingeleiteten Gemisches in einer bevorzugten Ausführungsform der Erfindung neben einer axialen Komponente eine rein tangentiale Komponente auf. In einer anderen Ausführungsform der Erfindung beinhaltet die Bewegung des in die Trennkammer eingeleiteten Gemisches neben einer axialen Komponente ebenfalls eine tangentiale und eine radiale Komponente.

Vorzugsweise ist die Einlaufachse bezogen auf die durch die Längsachse des Rotors und den Einlaufbereich verlaufende Hauptachse verstellbar ausgebildet. Damit ist die Einlaufachse des Einlaufbereiches, bevorzugt innerhalb des obenstehend angegebenen Winkelbereiches zwischen 0 und 90° im Betrieb der Trennvorrichtung veränderbar. Dadurch kann das Einströmverhalten des in die Trennkammer eingeleiteten Gemisches auf einfache Weise variiert werden. Insbesondere bei wechselnden, zu separierenden Gemischen kann der Einströmwinkel des Gemisches individuell in Abhängigkeit von der Zusammensetzung und den Eigenschaften des zu separierenden Gemisches angepasst werden.

Gemäß einer bevorzugten Weiterbildung der erfindungsgemäßen Trennvorrichtung ist vorgesehen, dass der Einlaufbereich ein Rohrstück aufweist, das einen geradlinigen und/oder gekrümmten Verlauf hat. Bevorzugt ist das Anschlussstück des an der Trennkammer ausgebildeten Einlaufbereiches mittels eines insbesondere zylindrischen Rohrstückes ausgebildet. In einer Ausführungsform weist das Rohrstück einen gekrümmten Verlauf auf. Mittels des gekrümmten Rohrstückes kann das in die Trennkammer eingeleitete Gemisch bevorzugt spiralförmig eingeleitet werden. Es ist ferner möglich, die benötigte Bauhöhe für den Einlaufbereich am Boden der Trennkammer gering zu halten. Ein insbesondere verstellbar an der bodenseitigen Stirnwand der Trennkammer aufgenommenes Rohrstück ist bevorzugt über ein Dichtelement zur Stirnwand der Trennkammer hin abgedichtet. In einer Ausführungsform der Erfindung, in der der Einlaufbereich feststehend an der Trennkammer ausgebildet ist, ist das den Einlaufbereich zumindest teilweise ausbildende Rohrstück fest mit der bodenseitigen Stirnwand verbunden, vorzugsweise stoffschlüssig.

Gemäß einer bevorzugten Ausführungsform der erfindungsgemäßen Trennvorrichtung sind mehrere Einlaufbereiche an der Stirnseite der Trennkammer ausgebildet, die vorzugsweise gleichmäßig zueinander beabstandet um die Längsachse des Rotors herum angeordnet sind. Das Einleiten des Gemisches erfolgt bevorzugt über mehrere Einlaufbereiche, mit denen eine vergleichmäßigte Strömung bzw. ein vergleichmäßigtes Strömungsbild im unteren Bereich der Trennkammer erzeugt wird. Bevorzugt sind die Einlaufbereiche symmetrisch um die Längsachse des Rotors herum an insbesondere der bodenseitigen Stirnwand der Trennkammer angeordnet.

Bevorzugt weist der Einlaufbereich eine Verteilerkammer mit einem umlaufenden Ringkanal und vorzugsweise mehreren axial gerichteten Durchlassöffnungen und/oder einem ringförmigen Ausströmschlitz auf. Der erfindungsgemäße Einlaufbereich weist somit eine Art Vorkammer auf. Die Verteilerkammer wird über den mit der Verteilerkammer fluidleitend gekoppelten Einlauf gleichmäßig mit dem Gemisch befüllt. Von der befüllten Verteilerkammer aus wird dann über Durchlassöffnungen oder den ringförmigen Ausströmschlitz das Gemisch bevorzugt in im Wesentlichen der Transportrichtung entlang des Rotors in die Trennkammer eingeleitet. Die Durchlassöffnungen sind bevorzugt gleichmäßig auf zum Beispiel einem Teilkreisdurchmesser der kreisförmigen Stirnwand um deren Mittenachse herum zueinander verteilt angeordnet. Optional oder alternativ weist die Verteilerkammer, anstelle der Durchlassöffnungen, als Übergang in Richtung der Trennkammer einen ringförmigen Ausströmschlitz auf. Der Ausströmschlitz ist bevorzugt nahe der Innenseite der zylindrischen Umfangswandung der mittels des Siebkörpers ausgebildeten Trennkammer angeordnet und weist bevorzugt eine Breite im Bereich von etwa 5 mm bis etwa 25 mm auf. In einer möglichen Ausführungsform der Erfindung ist die zylindrische Umfangswandung vollständig durch den Siebkörper gebildet.

In einer bevorzugten Weiterbildung der Erfindung ist an der Umfangswandung der Trennkammer im Einlaufbereich eine fluidundurchlässige Prallfläche vorgesehen. Die Prallfläche dient als Aufprallfläche für das Gemisch unmittelbar nach dem Einleiten in die Trennkammer. Die Prallfläche ist ein geschlossenes Flächenelement, welches das Gemisch nicht trennt, sondern das Gemisch insgesamt in eine bevorzugt spiralförmige Bewegung innerhalb der Trennkammer umlenkt. Des Weiteren weist der Bereich der Umfangswandung der Trennkammer durch die geschlossene Prallfläche eine erhöhte Festigkeit auf.

Gemäß einer Weiterbildung der erfindungsgemäßen Trennvorrichtung weist der Rotor eine Vielzahl von vorzugsweise lamellenartigen Transportelementen auf. Die Transportelemente, auch sogenannte Heberelemente, sind vorzugsweise in mehreren Reihen um die Längsachse herum angeordnet und/oder im Winkel geneigt zur Längsachse des Rotors ausgerichtet. Mittels der Transportelemente wird der feste Stoff vorzugsweise im Wesentlichen entlang der Längsachse des Rotors bewegt. Durch die Drehung des Rotors wirkt zudem auf das Gemisch eine in radialer Richtung wirkende Zentrifugalkraft, welche die flüssige Phase des Gemisches radial nach außen über den Siebkörper der Trennkammer aus derselbigen herausdrückt. Bevorzugt weist der Rotor eine im Wesentlichen vertikale Längsachse auf, sodass mit den Transportelementen eine Transportbewegung über ein vorbestimmtes Höhenmaß erfolgt, was das Trennen des festen Stoffes vom Fluid vereinfacht, welches durch die Schwerkraft außerhalb der Trennkammer selbsttätig nach unten fällt. In einer Ausführungsform der Erfindung kann die Längsachse des Rotors und damit die erfindungsgemäße Vorrichtung insgesamt geneigt zur Vertikalen verlaufen, beispielsweise in einem Winkel bis etwa 30° zur Vertikalen.

Der Rotor weist bevorzugt vier, fünf, sechs oder mehr Reihen von Transportelementen auf, welche gleichmäßig über den Umfang des Rotors verteilt sind. Jedes Transportelement ist eine Art Flächenelement, das sich radial nach außen erstreckt und insbesondere unter einem Winkel im Bereich zwischen 20 und 70° zur Längsachse des Rotorkörpers geneigt angeordnet ist. Die äußere Umfangsfläche der gleichmäßig über den Rotor verteilten Transportelemente weist eine an die Innenseite der Trennkammer angepasste Außenkontur auf. Bevorzugt ist die äußere Umfangsfläche des Rotors zylindrisch.

In einer bevorzugten Ausführungsform sind die Transportelemente zumindest abschnittsweise gekrümmt und/oder weisen an ihrer in Drehrichtung weisenden Vorderkante einen abgewinkelten Abschnitt mit einem abgeflachten Anstellwinkel auf. Durch die gekrümmte Kontur bzw. den abgewinkelten Abschnitt an den Transportelementen, auch bezeichnet als Heberelemente, erfolgt eine allmähliche bzw. stufenweise Umlenkung der Bewegung des festen Stoffes in Transportrichtung. Damit kann der Verschleiß am Rotor insgesamt weiter verringert werden. In einer bevorzugten Ausführungsform der Erfindung ist der abgewinkelte Abschnitt des Transportelementes im Bereich seiner Vorderkante verstellbar ausgebildet. Demnach kann der Anstellwinkel des abgeflachten Abschnittes individuell angepasst werden. Bevorzugt ist der abgewinkelte Abschnitt, bezogen auf den verbleibenden Abschnitt des Transportelementes, in einem Winkel im Bereich von -10° und +30° verstellbar.

Vorzugsweise ist gemäß einer Weiterbildung der erfindungsgemäßen Trennvorrichtung die Drehbewegung des Rotors auf die Strömungsgeschwindigkeit des eingeleiteten Gemisches derart abgestimmt, dass eine Relativgeschwindigkeit zwischen dem Rotor und dem eingeleiteten Gemisch vorgesehen ist. Bevorzugt bewegen sich die Transportelemente geringfügig schneller als das eingeleitete Gemisch und insbesondere die darin enthaltenen Feststoffe. Dadurch wird das Abführen des Gemisches aus dem Einlaufbereich der Trennkammer unterstützt.

Ein weiterer Aspekt der Erfindung betrifft eine Trennkammer für eine Trennvorrichtung, insbesondere zum Aufnehmen eines Rotors eines Zentrifugaltrockners, mit zumindest einem Einlaufbereich für ein in die Trennkammer einleitbares Gemisch aus einem festen Stoff und einem Fluid, einem einen Rotor zumindest bereichsweise umfangsseitig umgebenden Siebkörper zum Trennen des Fluids und des festen Stoffes, und einer Ausgabeöffnung für den festen Stoff.

Die Erfindung löst auch die bei der erfindungsgemäßen Trennkammer zugrundegelegte Aufgabe, indem der Einlaufbereich so an der Trennkammer ausgebildet ist, dass das Gemisch im Betrieb bei Eintritt in die Trennkammer eine Bewegung mit zumindest einer bezogen auf die Längsachse axialen Komponente in Transportrichtung ausführt, wobei die Trennkammer vorzugsweise nach einem der Ansprüche 1 bis 11 ausgebildet ist. Bevorzugt weist die Trennkammer an einer bodenseitigen Stirnwand den Einlaufbereich für das in die Trennkammer einzuleitende Gemisch auf. Mit einer solch erfindungsgemäßen Trennkammer kann der Verschleiß an der Trennkammer selbst wie auch an einem innerhalb der Trennkammer aufnehmbaren Rotor verringert werden. Hinsichtlich der erfindungsgemäßen Vorteile und möglicher bevorzugter Ausführungsformen der erfindungsgemäßen Trennkammer wird auf die vorstehenden Ausführungen zur erfindungsgemäßen Trennvorrichtung verwiesen.

Die Erfindung wird im Folgenden anhand eines bevorzugten Ausführungsbeispiels unter Bezugnahme auf die nachfolgenden Figuren näher beschrieben. Hierbei zeigen:
- Fig. 1:: eine perspektivische Ansicht einer erfindungsgemäßen Trennvorrichtung;
- Fig. 2:: eine Vorderansicht der Trennvorrichtung im Schnitt;
- Fig. 3:: eine perspektivische Ansicht eines an einer Trennkammer angeordneten Einlaufbereiches gemäß einer ersten Ausführungsform;
- Fig. 4:: eine Ansicht eines in unterschiedlichen Winkeln an der Trennkammer angeordneten Einlaufbereiches;
- Fig. 5 - 7:: Ansichten verschiedener Ausführungsformen des Einlaufbereiches mit daran angeordneten Leitelementen;
- Fig. 8:: eine Ansicht eines oberhalb des Einlaufbereichs angeordneten Rotors mit Transportelementen mit abgewinkeltem Schaufelabschnitt;
- Fig. 9 und 10:: perspektivische Ansichten von an einer Trennkammer angeordneten Einlaufbereichen gemäß weiteren Ausführungsformen;
- Fig. 11:: eine Draufsicht des Einlaufbereiches gemäß Fig. 9;
- Fig. 12 - 14:: perspektivische Ansichten verschiedener Ausführungsformen einer im Einlaufbereich der Trennkammer ausgebildeten Verteilerkammer; und
- Fig. 15:: eine Schnittdarstellung einer im Einlaufbereich einer Trennvorrichtung vorgesehenen Verteilerkammer nach Fig. 14.

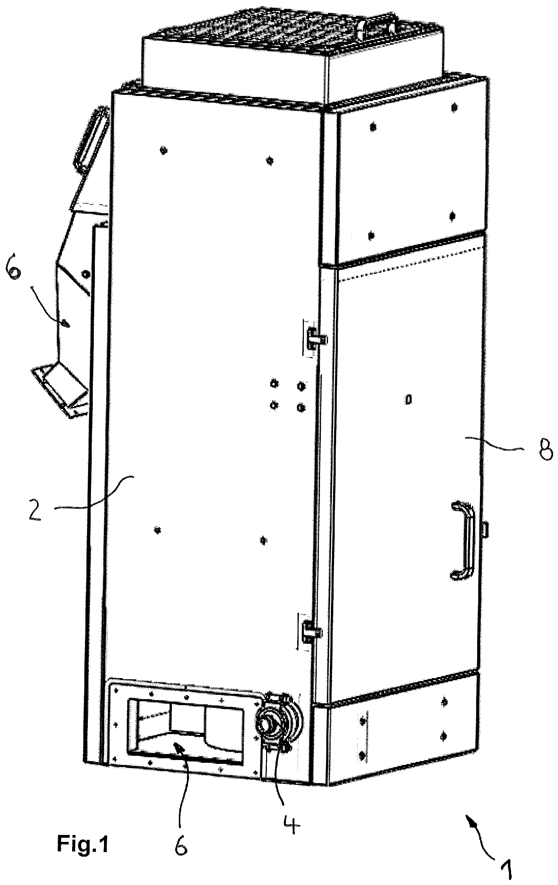

Fig. 1 zeigt eine als Zentrifugaltrockner ausgebildete Trennvorrichtung 1 zum Trennen eines festen Stoffes aus einem Förderstrom. Die Trennvorrichtung 1 umfasst ein Gehäuse 2 mit einem Einlass 4 zum Zuführen eines Gemisches aus einem Fluid, wie Wasser, und einem festen Stoff, wie beispielsweise Granulat. Das Gehäuse 2 weist einen Auslass 6 zum Abführen des Fluids aus dem Gehäuse und einen Auslass 6' zum Abführen des separierten festen Stoffes auf. Am Gehäuse 2 ist eine schwenkbar angelenkte Gehäusetür 8 angeordnet, mit der der Zugang in das Innere der Trennvorrichtung 1 möglich ist.

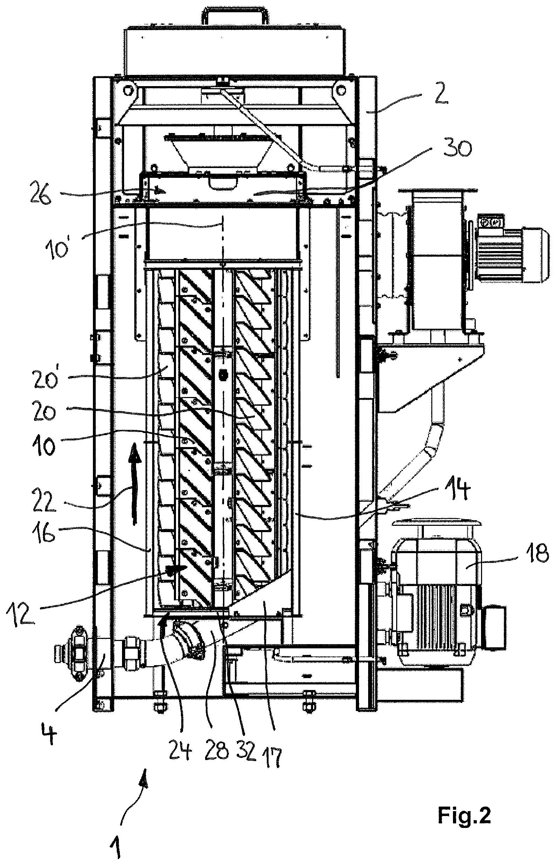

Wie Fig. 2 ferner zeigt, ist innerhalb des Gehäuses 2 ein Rotor 10 angeordnet. Der Rotor 10 ist im Betrieb der Trennvorrichtung 1 um eine im Wesentlichen vertikale Längsachse 10' drehbar gelagert. Das Gehäuse 2 weist ferner eine den Rotor umgebende Trennkammer 12 auf, welche eine bevorzugt zylindrische Form hat. Die Trennkammer 12 hat eine zumindest die den Rotor 10 in Umfangsrichtung bereichsweise und in Längsrichtung umgebende Umfangswandung 14. Diese wird durch einen Siebkörper 16 definiert. Der Siebkörper 16 ist dazu eingerichtet, den festen Stoff aus dem Gemisch herauszutrennen und das Fluid als Bestandteil des Gemisches in radialer Richtung durch die Öffnungen des Siebkörpers 16 hindurchzulassen. An der Umfangswandung 14 ist ferner eine fluidundurchlässige Prallfläche 17 ausgebildet, an der insbesondere unmittelbar aus dem Einlaufbereich in die Trennkammer 12 austretendes Gemisch in Umfangsrichtung der Trennkammer umgelenkt wird.

Der Rotor 10 ist in der vorliegenden Ausführungsform bevorzugt mit einem als Elektromotor ausgebildeten Antrieb 18 drehgebend gekoppelt. Der Rotor 10 weist eine Vielzahl von Transportelementen 20, 20' auf, die in mehreren Reihen um die Längsachse 10' des Rotors 10 herum angeordnet sind. Die Transportelemente 20, 20' verlaufen in einem Winkel geneigt zur Längsachse 10' des Rotors 10. Die Transportelemente 20, 20' bilden am äußeren Umfang des Rotors einen äußeren Förderabschnitt aus, mit dem in Kombination mit dem umfangsseitig umgebenden Siebkörper 16 eine Bewegung des festen Stoffes mit einer Transportrichtung 22 im Wesentlichen parallel zur Längsachse 10' bewirkt ist. Die Transportrichtung 22 verläuft in der gezeigten Ausführungsform etwa in vertikaler Richtung vom Boden 24 der Trennkammer 12 zum oberen Ende 26 der Trennkammer. Der Feststoff wird von einem Einlaufbereich 28 am Boden 24 der Trennkammer 12 in Richtung einer Ausgabeöffnung 30 am oberen Ende 26 der Trennkammer gefördert,

Die Ausgabeöffnung 30 ist mit dem Auslass 6' zum Abführen des separierten festen Stoffes verbunden.

Wie aus Fig. 2 ferner ersichtlich, ist der Einlaufbereich 28 so an der Trennkammer 12 ausgebildet, dass das Gemisch bei Eintritt in die Trennkammer 12 eine Bewegung mit zumindest einer bezogen auf die Längsachse 10' des Rotors 10 axialen Komponente in Transportrichtung 22 ausführt. Der Einlaufbereich 28 ist dazu an einer bodenseitigen Stirnwand 32 der Trennkammer 12 angeordnet.

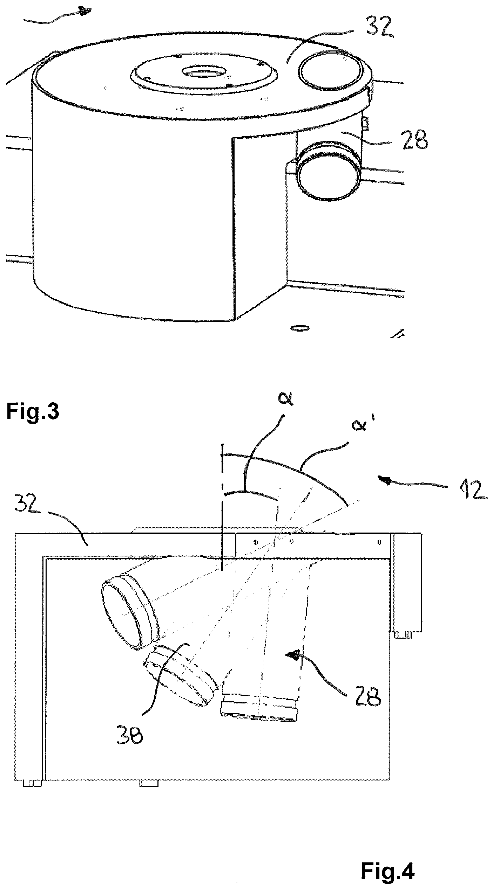

Fig. 3 zeigt eine erste Ausführungsform des insbesondere an der bodenseitigen Stirnwand 32 der Trennkammer 12 angeordneten Einlaufbereiches 28. Der Einlaufbereich 28 ist so an der Trennkammer 12 ausgebildet, dass das Gemisch bei oder nach Eintritt in die Trennkammer eine Bewegung mit einer tangentialen und einer axialen Komponente ausführt. Insbesondere wird das Gemisch in eine spiralförmige Bewegung versetzt.

Wie Fig. 4 verdeutlicht, kann gemäß verschiedenen Ausführungsformen der erfindungsgemäßen Trennvorrichtung der Einlaufbereich 28 unter verschiedenen Winkeln α, α' im Bereich von vorzugsweise 5 bis 85° zur Längsachse des Rotors angeordnet sein. Der Einlaufbereich 28 kann in einem festen Winkel zur bodenseitigen Stirnwand 32 der Trennkammer angeordnet sein. In einer Ausführungsform ist der Einlaufbereich 28' verstellbar an der Stirnwand 32 der Trennkammer 12 aufgenommen.

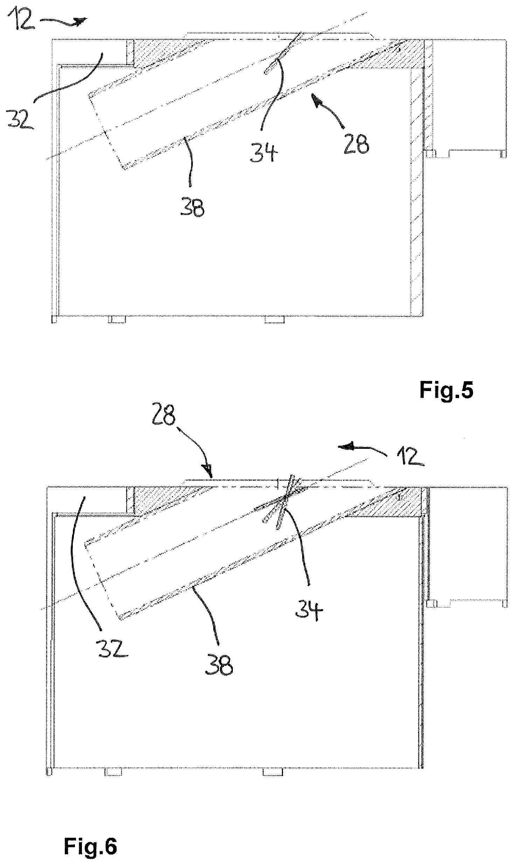

Die Fig. 5 bis 7 verdeutlichen, dass im Einlaufbereich 28 der Trennkammer 12 gemäß verschiedenen Ausführungsformen ein oder mehrere Leitelemente angeordnet sein können, mit denen Einfluss auf den Einströmwinkel des Gemisches im Einlaufbereich 28 genommen werden kann. Die Leitelemente 34, 34', welche in einer Ausführungsform als Leitbleche ausgebildet sind, weisen zur Einlaufachse 36 eine geneigte Ausrichtung auf. Insbesondere ist das Leitelement 34 oder die Leitelemente 34, 34' derart geneigt zur Einlaufachse 36 ausgerichtet, dass das Gemisch bei Eintritt in die Trennkammer 12 (Fig. 2) eine Bewegung in Transportrichtung ausführt, deren axiale Komponente deutlich größer ist als ohne ein entsprechendes Leitelement. Damit kann der Winkel des Einlaufbereiches bezogen auf die Längsachse 10' des Rotors 10 größer gewählt werden. Der benötigte Bauraum für den erfindungsgemäßen Einlaufbereich 28 wird damit unterhalb der Trennkammer 12 gering gehalten.

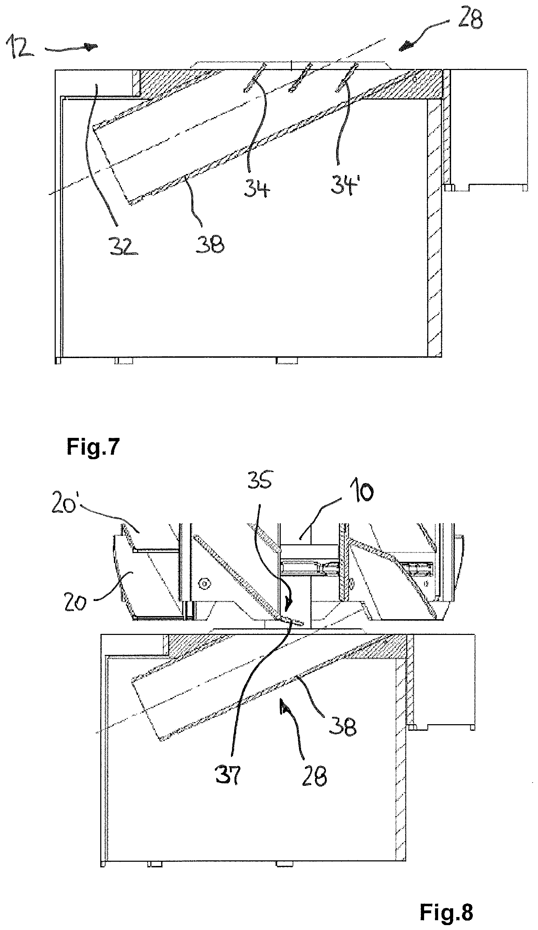

Alternativ zu den in den Fig. 5 bis 7 gezeigten Leitelementen können, wie Fig. 8 zeigt, alternativ oder optional die dem Einlaufbereich 28 zugeordneten Transportelemente 20 auf der untersten Ebene des Rotors 10, im Nahbereich der bodenseitigen Stirnwand 32 der Trennkammer 12 umlaufend, an ihrer Vorderkante 35 einen abgewinkelten Schaufelabschnitt 37 aufweisen. Der abgewinkelten Schaufelabschnitt 37 hat zum restlichen Transportelement, bezogen auf die Rotationsachse 10' des Rotors 10, einen abgeflachten Anstellwinkel. Mit dem abgewinkelten Abschnitt 36 erfolgt ein schonendes Aufnehmen der über den Einlaufbereich 28 in die Trennkammer 12 eingeleiteten festen Stoffe.

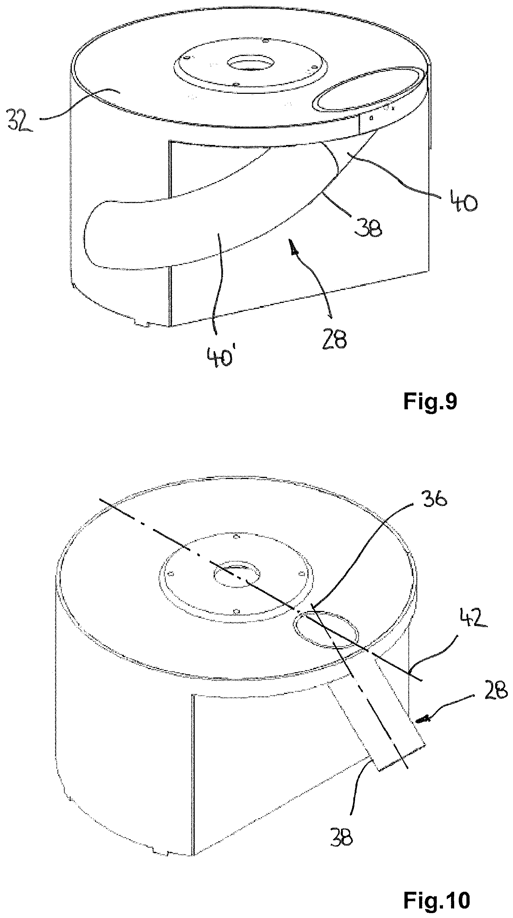

Wie aus Fig. 9 und wie auch aus den vorherigen Figuren ersichtlich, weist der Einlaufbereich 28 ein Rohrstück 38 auf, das in der in Fig. 9 gezeigten Ausführung zumindest einen Abschnitt 40 mit einem geraden Verlauf und einen Abschnitt 40' mit einem gekrümmten Verlauf aufweist.

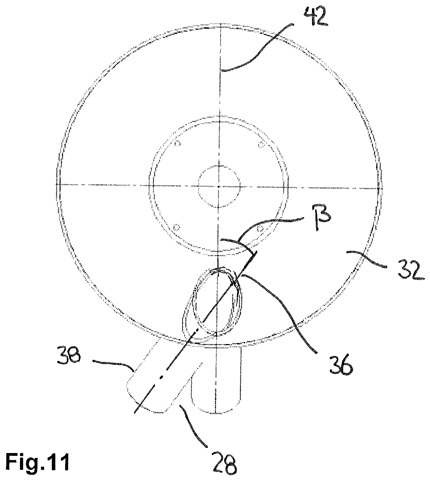

Fig. 10 zeigt eine mögliche Ausführungsform eines Einlaufbereiches 28, der eine Einlaufachse 36 hat, die bezogen auf eine durch die Längsachse des Rotors und den Einlaufbereich 28 verlaufende Hauptachse 42 in einem Winkel im Bereich von etwa 0° angeordnet ist. Das in die Trennkammer eingeleitete Gemisch weist somit vornehmlich eine Bewegung mit einer axialen und einer radialen Komponente auf. Fig. 11 verdeutlicht, dass die Einlaufachse 36 in einer alternativen Ausführungsform der erfindungsgemäßen Trennvorrichtung geneigt zur Hauptachse 42 ausgerichtet sein kann. In der vorliegenden Ausführungsform ist die Einlaufachse 36 bezogen auf die Hauptachse 42 in einem Winkel β von etwa 35° ausgerichtet. Damit wird über den Einlaufbereich 28 das Gemisch mit einer Bewegung in die Trennkammer 12 eingeleitet, die eine axiale, eine tangentiale und eine radiale Komponente hat. Der Winkel zwischen der Einlaufachse 36 und der Hauptachse 42 kann in einem Winkel im Bereich zwischen 0 und 90° variieren. In Abhängigkeit von der vorliegenden Ausführungsform der erfindungsgemäßen Trennvorrichtung ist der Einlaufbereich 28 mit seiner Einlaufachse bezogen auf die Hauptachse 42 feststehend oder auch verstellbar ausgebildet.

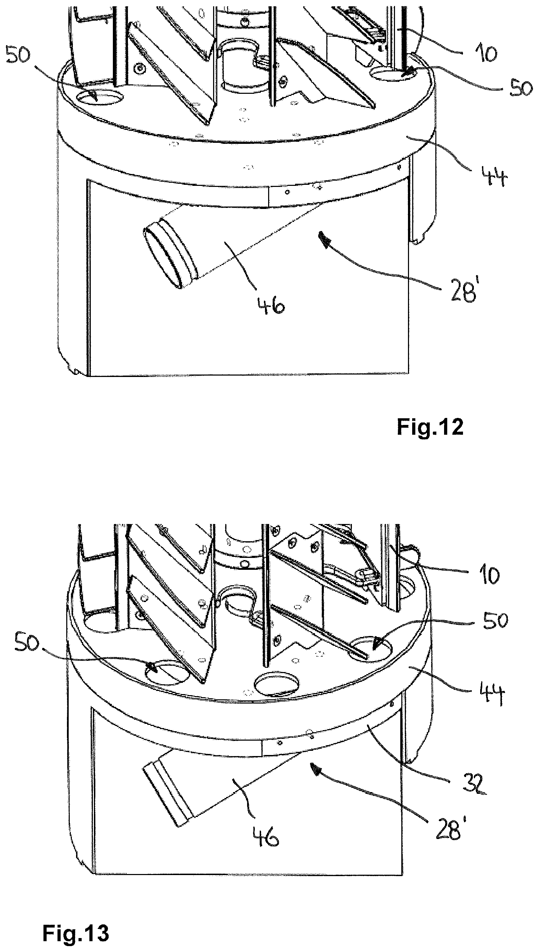

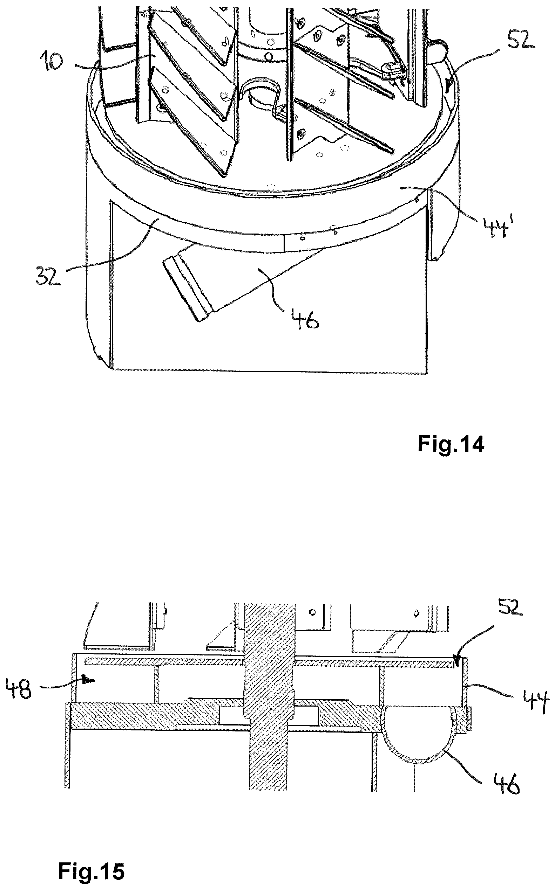

Die Fig. 12 bis 14 zeigen Ausführungsbeispiele einer erfindungsgemäßen Trennvorrichtung, wobei im Einlaufbereich 28' für die Trennkammer 12 jeweils eine Verteilerkammer 44, 44' vorgesehen ist. Jede der Verteilerkammern 44, 44' weist einen Einlauf 46 und zumindest einen innerhalb der Verteilerkammer angeordneten Ringkanal 48 (Fig. 15) auf. Die Verteilerkammer 44 umfasst ferner mehrere axial gerichtete Durchlassöffnungen 50.

Ein innerhalb der Trennkammer zu trennendes Gemisch strömt über den Einlauf 46 in die Verteilerkammer 44 ein. Das Gemisch verteilt sich dann gleichmäßig über den Ringkanal 48 in der Verteilerkammer 44 und tritt dann über die axialen Durchlassöffnungen 50 in die Trennkammer 12 über. In Abhängigkeit von der Anzahl der axialen Durchlassöffnungen weisen die Durchlassöffnungen entsprechend auf den Querschnitt des Einlaufes 46 angepasste freie Querschnitte auf. Damit wird ein Aufstauen des Gemisches in der Verteilerkammer 44 vermieden.

Die Fig. 14 und 15 zeigen eine alternative Ausführungsform der Verteilerkammer 44', welche anstelle von axialen Durchlassöffnungen einen ringförmigen Ausströmschlitz 52 aufweist. Der Ausströmschlitz 52 ist im Nahbereich der zylindrischen Umfangswandung 14 der Trennkammer 12 angeordnet. Die Breite des Ausströmschlitzes 52 ist auf die Korngröße des aus dem Gemisch herauszutrennenden festen Stoffes, wie beispielsweise Granulat, abgestimmt. Der Ausströmschlitz 52 erstreckt sich in der gezeigten Ausführungsform entlang des gesamten Umfangs der Verteilerkammer 44' und weist bevorzugt eine Breite im Bereich von etwa 5 mm bis etwa 25 mm auf.

Ähnliche oder gleiche Bauteile sind mit denselben Bezugszahlen bezeichnet.

### Bezugszeichen:

- 1: Trennvorrichtung
- 2: Gehäuse
- 4: Einlass
- 6, 6': Auslass
- 8: Gehäusetür
- 10: Rotor
- 10': Längsachse
- 12: Trennkammer
- 14: Umfangswandung
- 16: Siebkörper
- 17: Prallfläche
- 18: Antrieb
- 20, 20': Transportelement
- 22: Transportrichtung
- 24: Boden
- 26: oberes Ende
- 28, 28': Einlaufbereich
- 30: Ausgabeöffnung
- 32: Stirnwand
- 34, 34': Leitelement
- 35: Vorderkante
- 36: Einlaufachse
- 37: Schaufelabschnitt
- 38: Rohrstück
- 40, 40': Abschnitt
- 42: Hauptachse
- 44, 44': Verteilerkammer
- 46: Einlauf
- 48: Ringkanal
- 50: Durchlassöffnung
- 52: Ausströmschlitz

## Patentansprüche

1. Trennvorrichtung (1), insbesondere Zentrifugaltrockner, zum Trennen eines Gemisches aus einem festen Stoff und einem Fluid, insbesondere von Granulat und Wasser, mit
- einem Gehäuse (2), welches mindestens einen Einlass (4) zum Zuführen des Gemisches und mindestens einen Auslass (6, 6') zum Abführen des von dem Gemisch getrennten festen Stoffes und/oder des Fluids aufweist,
- einem innerhalb des Gehäuses (2) drehbar gelagerten Rotor (10), der dazu eingerichtet ist, durch Drehung eine Bewegung des festen Stoffes mit einer Transportrichtung im Wesentlichen entlang seiner Längsachse (10') zu bewirken, und
- einer durch mindestens einen Siebkörper (16) definierten Trennkammer (12), in welcher der Rotor (10) angeordnet ist und die mindestens einen Einlaufbereich (28, 28') für das Gemisch und zumindest eine Ausgabeöffnung (30) für den festen Stoff aufweist,
**dadurch gekennzeichnet, dass** der Einlaufbereich (28, 28') so an der Trennkammer (12) ausgebildet ist, dass das Gemisch bei Eintritt in die Trennkammer (12) eine Bewegung mit zumindest einer bezogen auf die Längsachse (10') des Rotors (10) axialen Komponente in Transportrichtung (22) ausführt.

2. Trennvorrichtung nach Anspruch 1,
**dadurch gekennzeichnet, dass** der Einlaufbereich (28, 28') so an der Trennkammer (12) ausgebildet ist, dass das Gemisch bei oder nach Eintritt in die Trennkammer (12) in eine im Wesentlichen spiralförmige Bewegung mit einer tangentialen und einer axialen Komponente versetzt ist.

3. Trennvorrichtung nach Anspruch 1 oder 2,
**dadurch gekennzeichnet, dass** der Einlaufbereich (28, 28') für das Gemisch in einem unteren Abschnitt der Trennkammer (12) angeordnet ist, vorzugsweise an einer bodenseitigen Stirnwand (32), wobei vorzugsweise der Einlaufbereich (28, 28') in einem Winkel im Bereich von 5 bis 85° zur Längsachse (10') des Rotors (10) angeordnet ist.

4. Trennvorrichtung nach einem der Ansprüche 1 bis 3,
**dadurch gekennzeichnet, dass** der Einlaufbereich (28, 28') bezogen auf die Längsachse (10') des Rotors (10) verstellbar an der Trennkammer (12), insbesondere an deren bodenseitigen Stirnwand (32), angeordnet ist.

5. Trennvorrichtung nach einem der vorstehenden Ansprüche,
**dadurch gekennzeichnet, dass** im Einlaufbereich (28, 28') ein oder mehrere Leitelemente (34, 34'), vorzugsweise Leitbleche, angeordnet sind, wobei das Leitelement (34, 34') feststehend oder verstellbar innerhalb des Einlaufbereiches (28, 28') aufgenommen ist.

6. Trennvorrichtung nach einem der vorstehenden Ansprüche,
**dadurch gekennzeichnet, dass** der Einlaufbereich (28, 28') eine Einlaufachse (36) aufweist, die bezogen auf eine durch die Längsachse (10') des Rotors (10) und den Einlaufbereich (28, 28') verlaufende Hauptachse (42), welche in einer Ebene senkrecht zur Längsachse des Rotors ausgerichtet ist, in einem Winkel im Bereich von etwa 0 bis 90° angeordnet ist.

7. Trennvorrichtung nach Anspruch 6,
**dadurch gekennzeichnet, dass** die Einlaufachse (36) bezogen auf die durch die Längsachse (10') des Rotors (10) und den Einlaufbereich (28, 28') verlaufende Hauptachse (42) verstellbar ist.

8. Trennvorrichtung nach einem der vorstehenden Ansprüche,
**dadurch gekennzeichnet, dass** der Einlaufbereich (28, 28') ein Rohrstück (38) aufweist, das einen geradlinigen und/oder gekrümmten Verlauf hat.

9. Trennvorrichtung nach einem der vorstehenden Ansprüche,
**dadurch gekennzeichnet, dass** mehrere Einlaufbereiche (28, 28') an der Stirnwand der Trennkammer (12) ausgebildet sind, die vorzugsweise gleichmäßig zueinander beanstandet um die Längsachse (10') des Rotors (10) herum angeordnet sind.

10. Trennvorrichtung nach einem der vorstehenden Ansprüche,
**dadurch gekennzeichnet, dass** der Einlaufbereich (28, 28') eine Verteilerkammer (44, 44') mit einem umlaufenden Ringkanal (48) und vorzugsweise mehrere axial gerichteten Durchlassöffnungen (50) und/oder einen ringförmigen Ausströmschlitz (52) aufweist.

11. Trennvorrichtung nach einem der vorstehenden Ansprüche,
**dadurch gekennzeichnet, dass** an der Umfangswandung (14) der Trennkammer (12) im Einlaufbereich (28, 28') eine fluidundurchlässige Prallfläche (17) vorgesehen ist.

12. Trennvorrichtung nach einem der vorstehenden Ansprüche,
**dadurch gekennzeichnet, dass** der Rotor eine Vielzahl (10) von vorzugsweise lamellenartigen Transportelementen (20, 20') aufweist, welche vorzugsweise in mehreren Reihen um die Längsachse (10') herum angeordnet und/oder in einem Winkel geneigt zur Längsachse (10') des Rotors (10) ausgerichtet sind.

13. Trennvorrichtung nach Anspruch 12,
**dadurch gekennzeichnet, dass** die Transportelemente (20, 20') zumindest abschnittsweise gekrümmt sind und/oder an ihrer in Drehrichtung weisenden Vorderkante (35) einen abgewinkelten Schaufelabschnitt (37) mit einem abgeflachten Anstellwinkel aufweisen.

14. Trennvorrichtung nach einem der vorstehenden Ansprüche,
**dadurch gekennzeichnet, dass** die Drehbewegung des Rotors (10) auf die Strömungsgeschwindigkeit des eingeleiteten Gemisches derart abgestimmte ist, dass eine Relativgeschwindigkeit zwischen dem Rotor (10) und dem eingeleiteten Gemisch vorgesehen ist

15. Trennkammer (12) für eine Trennvorrichtung, insbesondere zum Aufnehmen eines Rotors eines Zentrifugaltrockners, mit
zumindest einem Einlaufbereich (28, 28') für ein in die Trennkammer (12) einleitbares Gemisch aus einem festen Stoff und einem Fluid,
einem einen Rotor (10) umfangsseitig umgebenden Siebkörper (16) zum Trennen von Fluid und festem Stoff, und
einer Ausgabeöffnung für den festen Stoff,
**dadurch gekennzeichnet, dass** der Einlaufbereich (28, 28') so an der Trennkammer (12) ausgebildet ist, dass das Gemisch im Betrieb bei Eintritt in die Trennkammer (12) eine Bewegung mit zumindest einer bezogen auf die Längsachse axialen Komponente in Transportrichtung (22) ausführt, wobei die Trennkammer (12) vorzugsweise nach einem der Ansprüche 1 bis 11 ausgebildet ist.
